# EUROPÄISCHE PATENTANMELDUNG

(11) **EP 2 525 454 A2**
(43) Veröffentlichungstag der Anmeldung: **21.11.2012**
(21) Anmeldenummer: 12165264.8
(22) Anmeldetag: 24.04.2012
(51) Int. Cl.: H02B 1/56

(54) **Schaltanlage für Hoch- oder Mittelspannung**

(30) Priorität: 17.05.2011 DE 102011075990
(71) Anmelder: Schneider Electric Sachsenwerk GmbH, 93055 Regensburg (DE)
(72) Erfinder: Kaltenborn, Uwe, Regensburg 93049 (DE)
(74) Vertreter: Dreiss

(57) **Zusammenfassung**

Es wird eine Schaltanlage (2) für Hoch- oder Mittelspannung mit einer Komponente (4), die zumindest teilweise in einem Innenraum (8) der Schaltanlage (2) angeordnet ist, und die in einer Betriebsart eine erhöhte thermische Energie aufweist, und mit einem Wärmerohr (6) beschrieben. Das Wärmerohr (6) ist in dem Innenraum (8) der Schaltanlage (2) angeordnet. Das Wärmerohr weist einen Verdampfungsabschnitt (18) und einen Kondensationsabschnitt (20) auf. Das Wärmerohr (6) ist im Bereich des Verdampfungsabschnitts (18) mit der Komponente (4) thermisch gekoppelt. Das Wärmerohr (6) ist im Bereich des Kondensationsabschnitts (20) mit einer Umgebung (12) der Schaltanlage (2) thermisch gekoppelt. Das Wärmerohr (6) weist in seinem Innenraum einen Speicherstoff zum Transport thermischer Energie auf. Das Wärmerohr (6) weist im Bereich des Kondensationsabschnitts (20) zum Innenraum (8) der Schaltanlage (2) hin zumindest abschnittsweise ein Isolations-Material mit einer ersten Temperaturleitfähigkeit auf. Das Wärmerohr (6) weist im Bereich des Kondensationsabschnitts (20) hin zur Umgebung (12) der Schaltanlage (2) zumindest abschnittsweise ein Leitungs-Material mit einer zweiten Temperaturleitfähigkeit auf. Die erste Temperaturleitfähigkeit ist kleiner als die zweite Temperaturleitfähigkeit.

## Beschreibung

Die Erfindung betrifft eine Schaltanlage für Hoch- oder Mittelspannung nach dem Oberbegriff des Anspruchs 1.

Es ist bekannt, dass durch Energieverluste in elektrischen Anlagen bzw. in und von elektrischen Komponenten thermische Energie bzw. Wärme freigesetzt wird. Diese thermische Energie begrenzt den maximal erlaubten Nennstrom und damit die elektrische Nennleistung der entsprechenden Komponenten. Durch ein Ableiten der thermischen Energie von der Komponente weg, d.h. durch Kühlung der Komponente, kann der maximal erlaubte Nennstrom erhöht werden.

Zur Ableitung von thermischer Energie sind mehrere Techniken bekannt. Die Ableitung thermischer Energie kann beispielsweise durch passive Kühlrippen, aktive Kühler wie beispielsweise Ventilatoren oder durch erzwungene Konvektion erreicht werden. Bezüglich dieses Einsatzzwecks sind auch Wärmeübertrager (englisch: heat exchanger) beispielsweise in Form von Wärmerohren (englisch: heat-pipes) bekannt. Unter dem Begriff Wärmerohr fällt auch ein sogenanntes Thermosyphon.

Aus der EP 1 672 655 A1 ist ein Vakuumschalter mit einem ersten und einem zweiten Kontaktstück bekannt. Zum Abführen von in der Vakuumschaltkammer entstehender Wärme ist mindestens ein Wärmerohr vorgesehen.

Aus der DE 20 2006 013 674 U1 ist ein Hoch-, Mittel- oder Niederspannungsschaltschrank bekannt, der im Inneren angeordnete elektrische Leiter aufweist, die im Betrieb stromdurchflossen sind und sich dabei erwärmen. Den elektrischen Leitern sind heat-pipes bzw. Wärmerohre zugeordnet. Der Verdampferabschnitt der heat-pipes bzw. Wärmerohre ist mit den jeweiligen Leitern die Wärme gut leitend verbunden. Der Kondensatorabschnitt der heat-pipes bzw. Wärmerohre befindet sich außerhalb des Schaltschrankes. Zwischen dem Kondensatorbereich und dem Verdampferbereich ist ein insbesondere flexibles Rohr aus isolierendem Material zum Transport des verdampften Fluids vom Verdampferabschnitt zum Kondensatorabschnitt und des kondensierten Fluids von dort wieder zurück zum Verdampferbereich vorgesehen.

Ausgehend von dem beschriebenen Stand der Technik liegt der vorliegenden Erfindung die Aufgabe zugrunde, eine Schaltanlage mit einem Wärmerohr zu schaffen, die verbesserte elektrische und thermische Eigenschaften aufweist.

Die Aufgabe wird durch eine Schaltanlage nach dem Anspruch 1 gelöst.

Durch die erfindungsgemäße Schaltanlage mit einem Isolations-Material im Bereich eines Kondensationsabschnitts, das zu einem Innenraum der Schaltanlage hin ausgerichtet ist, und mit einem Leitungs-Material im Bereich des Kondensationsabschnitts, das hin zu einer Umgebung der Schaltanlage ausgerichtet ist, wird die thermische Energie bzw. die Wärme vorteilhaft von der Komponente über das Wärmerohr an die Umgebung der Schaltanlage abgeleitet. Dies wird durch die unterschiedlichen Temperaturleitfähigkeiten des Leitungs-Materials und des Isolations-Materials erreicht. Somit kann der maximale erlaubte Nennstrom beispielsweise eines Leistungsschalters vorteilhaft erhöht werden. Gleichzeitig wird eine Zerstörung der Komponente durch Überhitzung verhindert. Insbesondere wird die thermische Energie nicht in den Innenraum der Schaltanlage abgeleitet, wodurch auch andere Komponenten vor einer erhöhten Temperatur geschützt werden. Speziell in dem Kondensationsabschnitt wird viel Wärme bzw. thermische Energie freigesetzt. Diese thermische Energie wird durch das Isolations-Material daran gehindert, in großem Maße in den Innenraum der Schaltanlage einzutreten. Insgesamt können somit aufgrund eines reduzierten Wärmeeintrags in den Innenraum der Schaltanlage die anderen Komponenten räumlich näher an die Komponente bzw. den Leistungsschalter und auch näher an dem Wärmerohr verbaut werden. Vorteilhaft kann damit der Bauraum der Schaltanlage effizienter genutzt werden und gleichzeitig die thermische Energie bzw. die Wärme effizient abgleitet werden.

In einer vorteilhaften Ausführungsform der Schaltanlage weist das Isolations-Material eine höhere Durchschlagsfestigkeit und eine höhere Kriechstromfestigkeit als die Außenwand der Schaltanlage auf. Das Isolations-Material schützt somit den Kondensationsabschnitt des Wärmerohrs dielektrisch gegenüber hohen Potenzialdifferenzen zwischen beispielsweise der elektrischen Komponente und einer elektrisch leitenden und geerdeten Außenwand. Die hohe Durchschlagsfestigkeit und die hohe Kriechstromfestigkeit des Isolier-Materials tragen somit vorteilhaft zur effizienteren Nutzung des Bauraums bei.

In einer vorteilhaften Ausführungsform der Schaltanlage ist ein Speicherstoff in dem Wärmerohr ein fluoriertes Keton. Das fluorierte Keton zeichnet sich dadurch aus, dass es ein äußerst niedriges Treibhauspotenzial besitzt und eine hohe Durchschlagsfestigkeit und damit eine elektrische isolierende Wirkung aufweist.

In einer vorteilhaften Ausführungsform der Schaltanlage besitzt die Außenwand der Schaltanlage eine höhere Temperaturleitfähigkeit als das Isolations-Material und das Wärmerohr ist im Bereich des Leitungs-Materials mit der Außenwand thermisch gekoppelt. Dadurch und durch eine geringere Temperatur in der Umgebung der Schaltanlage als im Innenraum des Wärmerohrs kondensiert der gasförmige Speicherstoff im Wesentlichen an der Oberfläche des Leitungs-Materials, vom Innenraum des Wärmerohrs gesehen. Vorteilhaft sind dadurch keine äußeren Anbauten zur Ableitung von Wärme notwendig und die vorhandene Außenwand kann zur Wärmeableitung verwendet werden. Vorteilhaft werden dadurch keine weiteren Komponenten innerhalb der Schaltanlage durch die Abwärme der vorstehenden Komponente beeinträchtigt. Insgesamt kann dadurch eine bereits feststehende äußere Bemaßung der Schaltanlage beibehalten werden und gleichzeitig kann die Kühlleistung für die vorstehend genannte Komponente erhöht bzw. verbessert werden.

In einer weiteren vorteilhaften Ausführungsform der Schaltanlage ist zwischen dem Wärmerohr im Bereich des Kondensationsabschnitts und der Außenwand eine weitere Schicht aus einem dritten flexibel verformbaren Material mit einer höheren Temperaturleitfähigkeit als das Isolations-Material angeordnet. Das dritte flexible Material kann vorteilhaft Unebenheiten auf der Seite des Wärmerohres oder der Außenwand ausgleichen und damit dafür sorgen, dass die thermische Kopplung zwischen dem Leitungs-Material und der Außenwand verbessert wird.

In einer weiteren vorteilhaften Ausführungsform ist das Wärmerohr zwischen dem Verdampfungsabschnitt und dem Kondensationsabschnitt umfänglich zumindest abschnittsweise mit einem vierten Material versehen. Das vierte Material weist eine niedrigere Temperaturleitfähigkeit als das Leitungs-Material, auf. Diese Eigenschaft kann insbesondere durch einen glasfaser-verstärkten Kunststoff erreicht werden. Durch die niedrige Temperaturleitfähigkeit wird die in dem Wärmerohr transportierte thermische Energie nicht an den Innenraum der Schaltanlage abgegeben.

In einer vorteilhaften Ausführungsform der Schaltanlage weist das Wärmerohr zwischen dem Verdampfungsabschnitt und dem Kondensationsabschnitt zumindest abschnittsweise ein Gefälle hin zu dem Verdampfungsabschnitt auf. Dadurch verbessert sich die Zuführung des Speicherstoffs zu dem Verdampfungsabschnitt. Dieser Vorteil wird sowohl mit einem Thermosyphon sowie einem Wärmerohr mit Kapillaren erreicht.

In einer weiteren vorteilhaften Ausführungsform der Schaltanlage ist das Wärmerohr im Bereich des Verdampfungsabschnitts über ein Koppelelement mit höherer Temperaturleitfähigkeit als das vierte Material mit der Komponente verbunden. Das Koppelelement verbessert die Wärmeabfuhr bzw. die Ableitung der thermischen Energie ausgehend von der Komponente. Das Koppelelement besitzt einen direkten thermisch leitenden Kontakt zu der Komponente sowie direkten thermisch leitenden Kontakt zu dem Innenraum des Wärmerohrs.

Weitere Merkmale, Anwendungsmöglichkeiten und Vorteile der Erfindung ergeben sich aus der nachfolgenden Beschreibung von Ausführungsbeispielen der Erfindung, die in den Figuren der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es werden für funktionsäquivalente Größen in allen Figuren auch bei unterschiedlichen Ausführungsformen die gleichen Bezugszeichen verwendet.

### In der Zeichnung zeigen

Figur 1 eine schematische Darstellung eines Teils einer Schaltanlage für
Figur 2 eine schematische Schnittansicht eines ersten Teilbereichs des W
Figur 3 eine schematische Schnittansicht eines zweiten Teilbereichs des

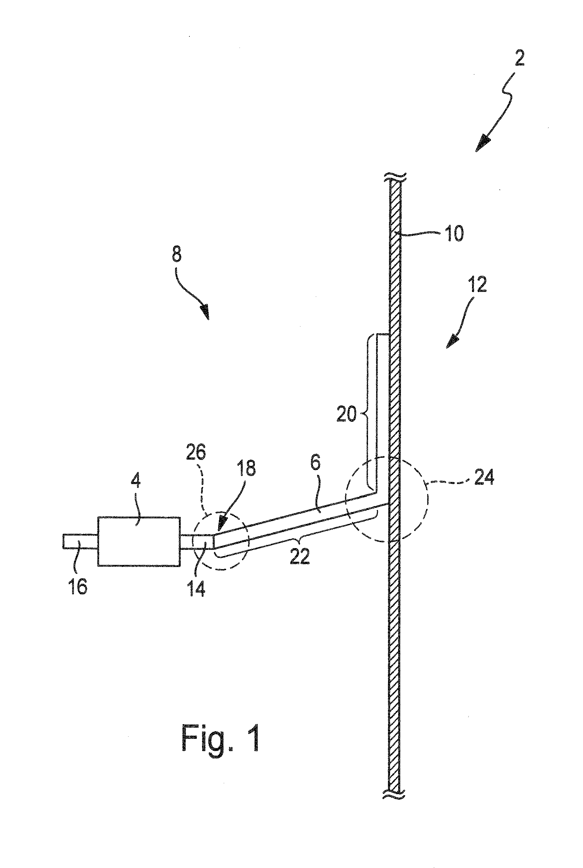

Figur 1 zeigt eine schematische Darstellung eines Teils einer Schaltanlage 2 für Hoch- oder Mittelspannung mit einer Komponente 4 und einem Wärmerohr 6 in einem Schnitt durch eine Außenwand 10 der Schaltanlage 2. Die Schaltanlage 2 kann als gasisolierte Schaltanlage oder als luftisolierte Schaltanlage ausgeführt sein. Die Komponente 4 ist in einem Innenraum 8 der Schaltanlage 2 angeordnet. Allgemein kann die Komponente 4 auch teilweise außerhalb der Schaltanlage 2 und damit zumindest teilweise im Innenraum der Schaltanlage angeordnet sein. Die Komponente 4 ist thermisch gekoppelt mit dem Wärmerohr 6. Das Wärmerohr 6 ist thermisch gekoppelt mit der Außenwand 10 der Schaltanlage 2. Die Außenwand 10 trennt den Innenraum 8 von einer Umgebung 12 der Schaltanlage 2. Die Außenwand 10 der Schaltanlage 2 besitzt eine hohe Temperaturleitfähigkeit. Insbesondere ist die Außenwand 10 aus einem Metall oder einer Metalllegierung gefertigt. Außerdem ist die Außenwand 10 elektrisch geerdet.

In einer Betriebsart weist die Komponente 4 eine erhöhte thermische Energie bzw. eine erhöhte Temperatur auf. In Figur 1 ist die Komponente 4 als ein Leistungsschalter ausgebildet und weist einen feststehenden Kontakt 14 und einen beweglichen Kontakt 16 auf. Beim Trennen der Kontakte 14 und 16 des Leistungsschalters entsteht zwischen den beiden Kontakten 14 und 16 ein Lichtbogen und damit eine erhöhte thermische Energie. Diese entstehende thermische Energie begrenzt den maximal zulässigen durch den Leistungsschalter schaltbaren Strom. Selbstverständlich kann die Komponente 4 anstatt als Leistungsschalter auch als Sammelschiene oder sonstige Komponente ausgebildet sein, die in zumindest einer Betriebsart eine erhöhte thermische Energie aufweist. Im Falle der Ausbildung der Komponente 4 als Leistungsschalter kann das Wärmerohr 6 anstatt mit dem feststehenden Kontakt 14 auch in geeigneter nicht beschriebener Weise mit dem beweglichen Kontakt 16 thermisch gekoppelt sein.

Das Wärmerohr 6 weist einen Verdampfungsabschnitt 18, einen Kondensationsabschnitt 20 und einen Verbindungsabschnitt 22 auf. Der Verbindungsabschnitt 22 befindet sich zwischen dem Verdampfungsabschnitt 18 und dem Kondensationsabschnitt 20. Das Wärmerohr 6 ist im Bereich des Verdampfungsabschnitts 18 mit der Komponente 4, insbesondere mit dem feststehenden Kontakt 14 thermisch gekoppelt.

Allgemein bedeutet die thermische Kopplung, dass ein Übergang der thermischen Energie vom einen Medium in das andere Medium möglich ist. Bei der thermischen Kopplung können sich zwischen den beiden Medien bzw. zwischen den beiden Materialien weitere Medien bzw. Materialien befinden. Die zur thermischen Kopplung verwendeten Medien bzw. Materialien weisen hierzu eine hohe Temperaturleitfähigkeit auf. Auch das Wärmerohr 6 dient der thermischen Kopplung. Insbesondere ist eine direkte thermische Kopplung zwischen zwei Elementen durch eine Kontaktierung der beiden Elemente, d.h. durch ein Anliegen der Elemente, oder durch eine Verbindung der Materialien der beiden Elemente ausgeführt.

Eine hohe Temperaturleitfähigkeit ist dadurch charakterisiert, dass eine Temperaturdifferenz zwischen beiden Seiten eines Materials durch das Material schnell ausgeglichen werden kann. Eine niedrige Temperaturleitfähigkeit ist dadurch charakterisiert, dass ein Material bezüglich der beiden Seiten eine hohe Temperaturdifferenz nur langsam oder gar nicht ausgleichen kann.

Das Wärmerohr 6 weist zwischen dem Verdampfungsabschnitt 18 und dem Kondensationsabschnitt 20, insbesondere zumindest abschnittsweise, ein Gefälle hin zu dem Verdampfungsabschnitt 18 auf, so dass sich beispielsweise eine Flüssigkeit stets hin zu dem Verdampfungsabschnitt 18 bewegt. Der Verdampfungsabschnitt 18 befindet sich am niedrigsten Punkt des Wärmerohrs 6.

Der Kondensationsabschnitt 20 des Wärmerohrs 6 verläuft im Wesentlichen in vertikaler Richtung entlang der Außenwand 10. Das Wärmerohr 6 ist im Bereich des Kondensationsabschnitts 20 mit der Umgebung 12 der Schaltanlage 2 thermisch gekoppelt. Die thermische Kopplung des Kondensationsabschnitts 20 mit der Umgebung 12 der Schaltanlage 2 ist über die Außenwand 10 ausgeführt. Die von dem Wärmerohr 6 an die Außenwand 10 abgegebene thermische Energie wird mittels Wärmeleitung, Luftkonvektion und/oder Wärmestrahlung an die Umgebung 12 außerhalb der Schaltanlage 2 abgegeben.

Das Wärmerohr 6 enthält einen Speicherstoff. In einem flüssigen Zustand wird der Speicherstoff im Bereich des Verdampfungsabschnitts 18 durch zugeführte thermische Energie erhitzt und in einen gasförmigen Zustand überführt. Der Speicherstoff bewegt sich in seinem gasförmigen Zustand ausgehend von dem Verdampfungsabschnitt 18 über den Verbindungsabschnitt 22 hin zu dem Kondensationsabschnitt 20. Im Kondensationsabschnitt 20 kondensiert der Speicherstoff und geht von seinem gasförmigen in den flüssigen Zustand über. Das Wärmerohr 6 ist entweder als ein Thermosyphon ausgebildet oder das Wärmerohr 6 weist Kapillare auf. Im Falle der Ausführung des Wärmerohrs 6 als Thermosyphon führt die Schwerkraft dazu, dass sich der Speicherstoff in seinem flüssigen Zustand wieder zu dem Verdampfungsabschnitt 18 hin bewegt. Weist das Wärmerohr 6 dagegen Kapillare auf, so sorgen die Kapillare dafür, dass sich der Speicherstoff in seinem flüssigen Zustand zu dem Verdampfungsabschnitt 18 hin bewegt. In der Ausführung gemäß der Figur 1 und der Ausführung des Wärmerohrs 6 mit Kapillaren hilft zusätzlich die Schwerkraft, um den Speicherstoff zum Verdampfungsabschnitt 18 zu führen. Selbstverständlich kann alternativ zu der Ausführungsform in Figur 1 das Wärmerohr 6 mit Kapillaren kein Gefälle hin zum Verdampfungsabschnitt aufweisen. Hierbei ist der Verlauf des Wärmerohrs beispielsweise waagrecht.

Der Speicherstoff weist vorteilhafterweise eine Siedetemperatur zwischen 20°C und 40°C bei 1 atm (Atmosphärendruck) auf, besitzt eine hohe elektrische Durchschlagsfestigkeit, vergleichbar mit der oder höher als die Durchschlagsfestigkeit von SF6, und sollte ein geringes Treibhauspotential besitzen.

In einer Ausführungsform ist der Speicherstoff in dem Wärmerohr 6 ein fluoriertes Keton. Insbesondere ist der Speicherstoff in einer Ausführungsform das Löschmittel "Novec 1230" der Firma "3M". "3M" und "Novec" sind Marken der 3M Company

Des Weiteren ist in Figur 1 ein erster Teilbereich 24 und ein zweiter Teilbereich 26 anhand eines gestrichelten Kreises gekennzeichnet. Der erste Teilbereich 24 umfasst den Übergang von dem Kondensationsabschnitt 20 zu dem Verbindungsabschnitt 22. Der zweite Teilbereich 26 umfasst den Verbindungsbereich 22, den Verdampfungsbereich 18 des Wärmerohrs 6 sowie den feststehenden Kontakt 14 der Komponente 4.

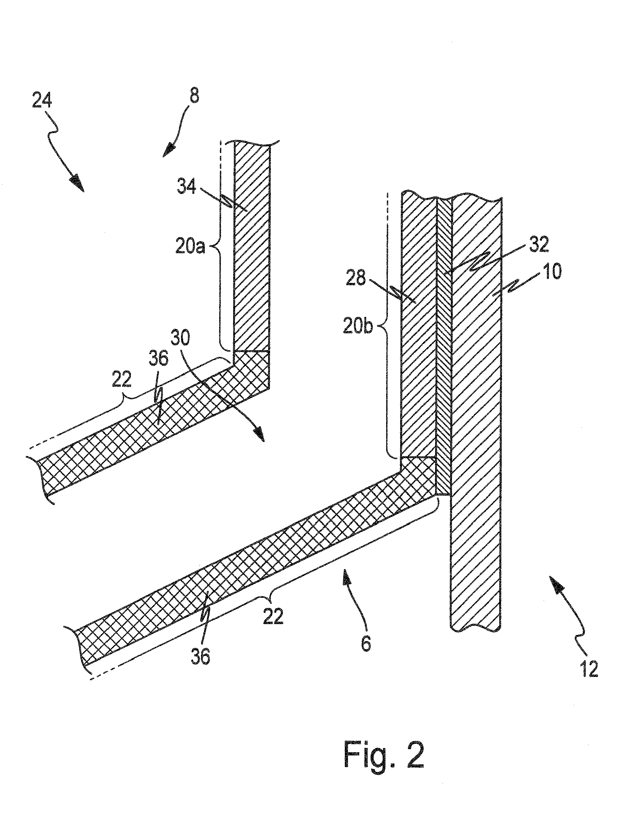

Figur 2 zeigt eine schematische Darstellung des ersten Teilbereichs 24 des Wärmerohrs 6 aus Figur 1. Das Wärmerohr 6 weist im Bereich des Kondensationsabschnitts 20a auf der der Außenwand 10 abgewandten Seite zumindest abschnittsweise ein Isolations-Material 34 mit niedriger Temperaturleitfähigkeit, hoher Durchschlagsfestigkeit und hoher Kriechfestigkeit auf. Insbesondere weist das Wärmerohr 6 im Bereich des Kondensationsabschnitts 20a zum Innenraum 8 der Schaltanlage 2 hin im Wesentlichen das Isolations-Material 34 auf. Das Isolations-Material 34 weist eine höhere Durchschlagsfestigkeit und eine höhere Kriechstromfestigkeit als die Außenwand 10 der Schaltanlage 2 auf. Des Weiteren weist die Außenwand 10 eine höhere Temperaturleitfähigkeit als das Isolations-Material 34 auf.

In einer alternativen Ausführungsform ist der Kondensationsabschnitt 20a des Wärmerohrs 6 mit einer Isolations-Schicht versehen, die beispielsweise außerhalb des Wärmerohrs 6 zum Innenraum 8 der Schaltanlage 2 hin angeordnet ist oder in das Wärmerohr 6 als Schicht hin zum Innenraum 8 der Schaltanlage eingearbeitet ist. Diese Isolations-Schicht schirmt den Innenraum 8 der Schaltanlage 2 im Bereich des Kondensationsabschnitts 20 zumindest teilweise oder ganz thermisch vom Innenraum 30 des Wärmerohrs 6 ab. Ist diese Isolations-Schicht außerhalb des Wärmerohrs 6 angeordnet, so kann das Material, das anstatt des Materials 34 verwendet wird, auch eine hohe Wärmeleitfähigkeit aufweisen. Die Isolations-Schicht weist die gleichen Eigenschaften, insbesondere hinsichtlich der Abschirmung von Wärme auf, wie das Material 34.

Das Isolations-Material 34 kann beispielsweise als Polyester mit Glasfasern oder als Epoxidharzformstoff ausgeführt sein. Das Isolations-Material 34 kann in einer alternativen Ausführung dem nachfolgend noch beschriebenen vierten Material 36 entsprechen.

Das Wärmerohr 6 weist im Bereich des Kondensationsabschnitts 20b zumindest abschnittsweise auf der der Außenwand 10 zugewandten Seite ein Leitungs-Material 28 auf, das eine hohe Temperaturleitfähigkeit aufweist. Das Leitungs-Material 28 des Wärmerohrs 6 ist im Wesentlichen hin zur Umgebung 12 der Schaltanlage 2 orientiert. Das Leitungs-Material 28 ist insbesondere ein Metall, eine Metalllegierung oder eine Keramik. Das Wärmerohr 6 ist im Bereich des Leitungs-Materials 28 zumindest abschnittsweise mit der Außenwand 10 thermisch gekoppelt. Der gasförmige Speicherstoff in dem Innenraum 30 des Wärmerohrs 6 kondensiert im Innenraum 30 hauptsächlich an der Oberfläche des Leitungs-Materials 28 aufgrund des Temperaturunterschiedes zwischen der Umgebung 12 und dem Innenraum 30 des Wärmerohrs 6. Vorzugsweise wird der Kondensationsabschnitt 20b in einem Bereich der Außenwand 10 der Schaltanlage 2 angeordnet, der nicht für Personal zugänglich ist, beispielsweise an einer nicht zugänglichen hinteren Wand oder aber in einem Deckenabschnitt der Schaltanlage 2, der die Schaltanlage 2 nach oben abschließt.

Die Temperaturleitfähigkeit des Isolations-Materials 34, insbesondere als erste Temperaturleitfähigkeit bezeichnet, ist kleiner als die Temperaturleitfähigkeit des Leitungs-Materials 28, insbesondere als zweite Temperaturleitfähigkeit bezeichnet. Dadurch, dass die erste Temperaturleitfähigkeit kleiner als die zweite Temperaturleitfähigkeit ist, wirkt das Isolations-Material 34 thermisch isolierend und das Leitungs-Material 28 thermisch leitend. Durch die niedrige Temperaturleitfähigkeit des Isolations-Materials 34 kondensiert der gasförmige Speicherstoff im Wesentlichen an der Oberfläche des Leitungs-Materials 28, aus dem Innenraum 30 gesehen, und weniger an der Oberfläche des weiteren Materials 34, ebenfalls aus dem Innenraum 30 gesehen. Damit wird thermische Energie aus dem Speicherstoff bevorzugt von dem Speicherstoff auf das Leitungs-Material 28 übertragen.

Zwischen dem Wärmerohr 6 und der Außenwand 10 ist eine weitere Schicht aus einem dritten flexibel verformbaren Material 32 zumindest im Bereich des Kondensationsabschnitts 20b angeordnet, wobei das dritte Material 32 eine Temperaturleitfähigkeit aufweist, die größer ist als die Temperaturleitfähigkeit des Isolations-Materials 34. Das dritte flexibel verformbare Material 32 dient dazu, Unebenheiten des anliegenden Wärmerohres 6 bzw. des Leitungs-Materials 28 und/oder der Außenwand 10 auszugleichen und damit für einen direkten Kontakt und eine verbesserte Temperatur- bzw. Wärmeleitfähigkeit zu sorgen. Der Innenraum 30 ist über das Leitungs-Material 28, das dritte Material 32 und die Außenwand 10 mit der Umgebung 12 thermisch gekoppelt. Selbstverständlich kann der Innenraum 30 auch ohne das dritte Material 32 lediglich über das Leitungs-Material 28 und die Außenwand 10 mit der Umgebung 12 thermisch gekoppelt sein. Diesbezüglich sind selbstverständlich auch weitere Schichten zwischen dem Wärmerohr 6 und der Umgebung 12 denkbar. Ebenso ist es möglich, dass sich das Wärmerohr 6 zumindest teilweise außerhalb der Schaltanlage 2 befindet.

Der Verbindungsabschnitt 22 des Wärmerohrs 6 zwischen der Komponente 4 und dem Kondensationsabschnitt 20 ist in Längsrichtung zumindest abschnittsweise umfänglich aus einem vierten Material 36 mit niedriger Temperaturleitfähigkeit, hoher Durchschlagsfestigkeit und hoher Kriechstromfestigkeit gefertigt. Das vierte Material 36 weist eine niedrigere Temperaturleitfähigkeit als das Leitungs-Material 28 auf. Insbesondere ist das vierte Material 36 ein glasfaser-verstärkter Kunststoff. Das Isolations-Material 34 kann dem vierten Material 36 entsprechen und kann damit insbesondere aus einem glasfaser-verstärkten Kunststoff gefertigt sein.

Bezüglich der Durchschlagsfestigkeit ist die Durchschlagspannung des vierten Materials 36 größer als die Durchschlagspannung des Isolations-Materials 34. In einer alternativen Ausführung ist die Durchschlagspannung des Isolations-Materials 34 im Wesentlichen gleich der Durchschlagspannung des vierten Materials 36, insbesondere dann, wenn das Isolations-Material 34 und das vierte Material 36 das gleiche Material sind. Die Kriechstromfestigkeit des vierten Materials 36 ist größer als die Kriechstromfestigkeit des Isolations-Materials 34. Die Temperaturleitfähigkeit des Isolations-Materials 34 ist im Wesentlichen gleich der Temperaturleitfähigkeit des vierten Materials 36. In einer alternativen Ausführung ist die Temperaturleitfähigkeit des Isolations-Materials 34 größer als die Temperaturleitfähigkeit des vierten Materials 36.

Der Kondensationsabschnitt 20 des Wärmerohrs 6 erstreckt sich in seiner Längsrichtung im Wesentlichen vertikal und ist im Wesentlichen parallel zu der Außenwand 10 bzw. zu der inneren Oberfläche der Außenwand 10 ausgerichtet. Nach oben hin ist der Kondensationsabschnitt 20 verschlossen. Insgesamt schließt das Wärmerohr 6 seinen Innenraum 30 nach außen hin hermetisch ab. In seinem Querschnitt kann der Kondensationsabschnitt 20, insbesondere der Bereich mit dem Isolations-Material 34, beispielsweise halbkreisförmig, der Halbkreis geöffnet hin zu der Außenwand 10, ausgebildet sein. Dadurch kann das Wärmerohr 6 im Bereich des Leitungs-Materials 28 flächig an das dritte Material 32 bzw. die Außenwand 10 anliegen. Selbstverständlich kann das Wärmerohr 6 im Bereich des Kondensationsabschnitts 20, insbesondere hinsichtlich der an der Außenwand 10 bzw. dem dritten Material 32 anliegenden Bereich auch andersartig ausgestaltet sein, so dass ein optimaler Grad der Kondensation erreicht wird, was beispielsweise durch ein großflächiges Anliegen des Wärmerohrs 6, insbesondere im Bereich des Leitungs-Materials 28 an das dritte Material 32 bzw. an die Außenwand 10 erreicht wird. Je nach Anforderung an die im Innenraum 8 der Schaltanlage 2 zu verbauenden bzw. verbauten Komponenten kann der Kondensationsabschnitt 20 selbstverständlich jede andere geeignete Form aufweisen.

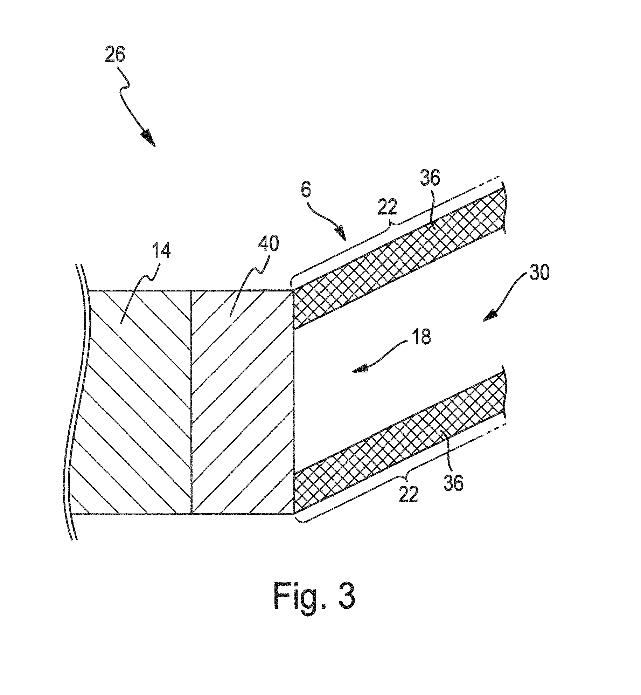

Figur 3 zeigt eine schematische Schnittansicht des zweiten Teilbereichs 26 des Wärmerohrs 6 aus Figur 1. Der Innenraum 30 des Wärmerohrs 6 ist im Bereich des Verdampfungsabschnitts 18 mit einem Koppelelement 40 verschlossen. Im Bereich des Verdampfungsabschnitts 18 ist das Wärmerohr 6 über das Koppelelement 40 mit dem feststehenden Kontakt 14 und damit mit der Komponente 4 verbunden. Das Koppelelement 40 weist eine höhere Temperaturleitfähigkeit als das vierte Material 36 auf und kann damit thermische Energie ausgehend von dem feststehenden Kontakt 14 hin zu dem Verdampfungsabschnitt 18 im Innenraum 30 des Wärmerohrs 6 transportieren, ohne dass Wärme in einem großen Umfang aus dem Innenraum 30 über das vierte Material 36 in den Innenraum 8 der Schaltanlage 2 tritt. Das Koppelelement 40 besteht aus einem Metall, einer Metalllegierung oder einer Keramik. Das Koppelelement 40 befindet sich am niedrigsten Punkt oder im Bereich des niedrigsten Punkts des Wärmerohrs 6, so dass flüssiger Speicherstoff stets hin zu dem Koppelelement 40 fließt. Weist das Koppelelement 40 hin zu dem Innenraum 30 unter Berücksichtigung der Druckverhältnisse eine höhere Temperatur als die Siedetemperatur des Speicherstoffs in dem Innenraum 30 auf, so verdampft der Speicherstoff im Bereich des Verdampfungsabschnitts 18.

Das Wärmerohr 6 weist zwischen dem Koppelelement 40 und dem Kondensationsabschnitt 20 zumindest abschnittsweise ein Gefälle hin zu dem Verdampfungsabschnitt 18 auf. Ist die Komponente 2 kein Leistungsschalter, so ist der Verdampfungsabschnitt 18 des Wärmerohrs 6 analog zum Koppelelement 40 mit einem wärmeleitenden Element der Komponente 4 thermisch gekoppelt. Selbstverständlich kann das Wärmerohr 6 auch direkt mit der zu kühlenden Komponente verbunden sein.

Selbstverständlich kann alternativ zu der in Figur 3 gezeigten thermischen Kopplung zwischen Wärmerohr 6 und der Komponente 4 diese auch anders ausgeführt sein. Beispielsweise kann das Koppelelement 40 im Bereich des Verdampfungsabschnitts 18 im Innenraum 30 des Wärmerohrs 6 zur Übertragung von thermischer Energie von dem Koppelelement 40 auf den Speicherstoff anders ausgerichtet, beispielsweise waagrecht, und/oder anders geformt sein, beispielsweise wellig zur Vergrößerung der Oberfläche hin zum Innenraum 30.

## Patentansprüche

1. Schaltanlage (2) für Hoch- oder Mittelspannung mit einer Komponente (4), die zumindest teilweise in einem Innenraum (8) der Schaltanlage (2) angeordnet ist, und die in einer Betriebsart eine erhöhte thermische Energie aufweist, und mit einem Wärmerohr (6), das in dem Innenraum (8) der Schaltanlage (2) angeordnet ist, das einen Verdampfungsabschnitt (18) und einen Kondensationsabschnitt (20) aufweist, das im Bereich des Verdampfungsabschnitts (18) mit der Komponente (4) thermisch gekoppelt ist, das im Bereich des Kondensationsabschnitts (20) mit einer Umgebung (12) der Schaltanlage (2) thermisch gekoppelt ist, und das in seinem Innenraum (30) einen Speicherstoff zum Transport thermischer Energie aufweist, **dadurch gekennzeichnet, dass** das Wärmerohr (6) im Bereich des Kondensationsabschnitts (20) hin zum Innenraum (8) der Schaltanlage (2) zumindest abschnittsweise ein Isolations-Material (34) mit einer ersten Temperaturleitfähigkeit aufweist, dass das Wärmerohr (6) im Bereich des Kondensationsabschnitts (20) hin zur Umgebung (12) der Schaltanlage (2) zumindest abschnittsweise ein Leitungs-Material (28) mit einer zweiten Temperaturleitfähigkeit aufweist, und dass die erste Temperaturleitfähigkeit kleiner ist als die zweite Temperaturleitfähigkeit.

2. Schaltanlage (2) nach Anspruch 1, wobei das Isolations- Material (34) eine höhere Durchschlagsfestigkeit und eine höhere Kriechstromfestigkeit als die Außenwand (10) der Schaltanlage (2) aufweist.

3. Schaltanlage (2) nach Anspruch 1 oder 2, wobei der Speicherstoff in dem Wärmerohr (6) ein fluoriertes Keton ist.

4. Schaltanlage (2) nach einem der vorstehenden Ansprüche, wobei die Außenwand (10), insbesondere aus einem Metall oder einer Metalllegierung, eine höhere Temperaturleitfähigkeit als das Isolations-Material (34) aufweist, und dass das Wärmerohr (6) im Bereich des Leitungs-Materials (28), zumindest abschnittsweise mit der Außenwand (10), vorzugsweise im Wesentlichen über die gesamte äußere Fläche des Leitungs-Materials (28), thermisch gekoppelt ist.

5. Schaltanlage (2) nach Anspruch 4, wobei zwischen dem Wärmerohr (6) im Bereich des Kondensationsabschnitts (20) und der Außenwand (10) eine weitere Schicht aus einem dritten flexibel verformbaren Material (32) mit einer größeren Temperaturleitfähigkeit als das Isolations-Material (34) angeordnet ist.

6. Schaltanlage (2) nach einem der vorstehenden Ansprüche, wobei das Wärmerohr (6) zwischen dem Verdampfungsabschnitt (18) und dem Kondensationsabschnitt (20) in Längsrichtung zumindest abschnittsweise umfänglich ein viertes Material (36), insbesondere einen glasfaser-verstärkten Kunststoff, mit einem niedrigeren Temperaturleitfähigkeit als das Leitungs-Material (28) aufweist.

7. Schaltanlage (2) nach einem der vorstehenden Ansprüche, wobei das Wärmerohr (6) zwischen dem Verdampfungsabschnitt (18) und dem Kondensationsabschnitt (20) zumindest abschnittsweise ein Gefälle hin zu dem Verdampfungsabschnitt (18) aufweist.

8. Schaltanlage (2) nach Anspruch 6 oder 7, wobei das Wärmerohr (6) im Bereich des Verdampfungsabschnitts (18) über ein Koppelelement (40) mit einer höheren Temperaturleitfähigkeit als das vierte Material (36) mit der Komponente (4) verbunden ist.

9. Schaltanlage (2) nach Anspruch 8, wobei sich das Koppelelement (40) im Bereich des niedrigsten Punkts des Wärmerohrs (6) befindet.

10. Schaltanlage (2) nach einem der vorstehenden Ansprüche, wobei die Komponente (2) ein Leistungsschalter ist, und wobei der Verdampfungsabschnitt (18) des Wärmerohrs (6) mit einem feststehenden Kontakt (14) des Leistungsschalters thermisch gekoppelt ist.

11. Schaltanlage (2) nach einem der vorstehenden Ansprüche, wobei das Wärmerohr (6) ein Thermosyphon ist.

12. Schaltanlage (2) nach einem der vorstehenden Ansprüche, wobei das Wärmerohr (6) Kapillare aufweist.
